# EUROPÄISCHE PATENTSCHRIFT

(11) **EP 2 627 523 B1**
(45) Veröffentlichungstag und Bekanntmachung des Hinweises auf die Patenterteilung: **26.10.2016**
(21) Anmeldenummer: 11761296.0
(22) Anmeldetag: 22.08.2011
(51) Int. Cl.: B60C 9/20

(54) **FAHRZEUGLUFTREIFEN**
VEHICLE PNEUMATIC TYRES
PNEUMATIQUE DE VÉHICULE

(30) Priorität: 14.10.2010 DE 102010038199
(43) Veröffentlichungstag der Anmeldung: 21.08.2013
(73) Patentinhaber: Continental Reifen Deutschland GmbH, 30165 Hannover (DE)
(72) Erfinder: LUDWIG, Reinhard, 31848 Bad Münder (DE); VOLK, Heiner, 31535 Neustadt (DE); STRUEBEL, Christian, 30559 Hannover (DE); BINDER, Axel, 30161 Hannover (DE)
(74) Vertreter: Finger, Karsten
(86) Internationale Anmeldenummer: PCT/EP2011/064338
(87) Internationale Veröffentlichungsnummer: WO 2012/048930

(56) Entgegenhaltungen:
- EP-A1- 0 795 426
- EP-A2- 1 066 989
- US-A- 5 529 105
- US-A1- 2004 026 001

## Beschreibung

Die Erfindung betrifft einen PKW- Fahrzeugluftreifen in Radialbauart mit einem Gürtelpaket, welches eine erste und eine zweite Gürtellage aufweist, wobei die erste und die zweite Gürtellage aus in Kautschukmaterial eingebetteten, im Wesentlichen parallel und beabstandet zueinander angeordneten Monofilamenten aus Stahl bestehen und wobei die Monofilamente der ersten Gürtellage kreuzend zu den Monofilamenten der zweiten Gürtellage angeordnet sind.

Ein derartiger Fahrzeugluftreifen gemäß des Oberbegriffes ist aus der EP 0 795 426 B1 bekannt geworden.
Aus der US 2004/0026001 A1 ist weiterhin ein PKW-Notlaufreifen mit verdickter Seitenwand bekannt, der einen dreilagigen Gürtel aufweist, wobei die radial äußerste Gürtellage Korde aus Stahl aufweist, welche einen Winkel zwischen 40° und 90° mit der Reifenumfangsrichtung einschließen.
Aus der US 5,529,105 A ist ebenfalls ein PKW-Notlaufreifen mit verdickter Seitenwand bekannt, der radial außen in Bezug auf die Gürtellagen eine weitere Festigkeitsträgerlage mit Korden aus nicht-metallischen Materialien aufweist, welche in radialer Richtung angeordnet sind.

Das aus zwei sich in einem Winkel kreuzenden Gürtellagen bestehende Gürtelpaket sorgt für die Steifigkeit der Reifenlauffläche in Umfangs- und Querrichtung. Die Festigkeitsträger dieser ersten und zweiten Gürtellage sind üblicherweise derart angeordnet, dass sie einen Winkel zwischen + (-) 12° und + (-) 45° mit der Umfangsrichtung einschließen. Dieses dient beim Fahren der Kraftübertragung, der Seitenführung und verringert den Abrieb des Reifens. Die Bestrebungen in der Reifenentwicklung gehen dahin, den Rollwiderstand des Reifens zu senken, alle anderen Performance-Kriterien des Reifens aber auf dem bekannt hohen Niveau zu halten. Durch den Einsatz von Monofilamenten in den Gürtellagen kann der Rollwiderstand gesenkt werden. Denn die Monofilamente sind dünner gummiert als bei den bisher eingesetzten Korden, welche aus miteinander verdrehten Filamenten bestehen. Es ist an Material und an Gewicht des Reifens eingespart, wodurch ein Vorteil in Bezug auf den Rollwiderstand des Reifens erreicht ist.

Entgegen der bisherigen Meinung der Fachwelt fällt ein Fahrzeugluftreifen mit Monofilamenten als Festigkeitsträger in den Gürtellagen nicht aufgrund von Monofilament-Brüchen aus. Es war vermutet worden, dass die Monofilamente aufgrund ihrer Inkompressibilität bei Stauchung im Fahrbetrieb des Reifens zum Bruch neigen würden. Bei einer geeigneten Monofilamentwahl in Bezug auf Material und Auslegung sind die Monofilamente ausreichend resistent gegen Kompressionsbrüche.

Es hat sich jedoch herausgestellt, daß die beschriebene Konstruktion mit zwei Monofilamentgürteln eine geringere Seitenkraftsteifigkeit aufweist als vergleichbare Konstruktionen mit Korden, bei denen zwei oder mehr Filamente miteinander verseilt sind. Dies verschlechtert deutlich das Fahrverhalten (Handling) des Fahrzeugs.

Zudem hat sich als nachteilig herausgestellt, dass bestimmte PKW- und VAN Reifentypen mit einem aus zwei Monofilamentlagen bestehenden Gürtel den gesetzlich vorgeschriebenen "Plungertest" nicht oder nur knapp bestehen. Der Plungertest ist eine statische Prüfung der Reifenkarkassenfestigkeit am Fahrzeugluftreifen gegenüber penetrierenden Fahrbahnhindernissen wie beispielsweise Bordsteinschwellen mittels ein- oder durchdrückendem Stahldorn. Der Stahldorn mit halbkugeligem Ende (Ǿ 19mm) wird auf die Äquatorialebene des Reifens senkrecht aufgesetzt und mit einer vorgegebenen Eindringgeschwindigkeit eingedrückt. Der Test ist in der amerikanischen DOT-Norm vermerkt.

Es ist daher die Aufgabe der Erfindung, einen Fahrzeugluftreifen bereitzustellen, der eine rollwiderstandsoptimierte Gürtelkonstruktion aufweist, die sowohl die Seitenführungskraft auf einem hohen Niveau hält oder verbessert als auch den Plungertest besteht.

Die Aufgabe wird gelöst, indem das Gürtelpaket eine dritte Gürtellage in Funktion einer Sperrlage aufweist, indem diese dritte Gürtellage wenigstens im Bereich der Äquatorialebene des Fahrzeugluftreifens angeordnet ist, indem die Festigkeitsträger dieser dritten Gürtellage einen Winkel zwischen 50° und 90° mit der Umfangsrichtung des Fahrzeugluftreifens einschließen und indem die Festigkeitsträger der dritten Gürtellage Monofilamente aus Stahl sind.

Durch die Anordnung der Sperrlage ist erreicht, dass der erfindungsgemäße Fahrzeugluftreifen die Anforderungen an den Plungertest erfüllt. Denn die in dem vorgenannten Winkel zur Umfangsrichtung angeordneten Festigkeitsträger der Sperrlage verhindern das Eindringen des Testobjektes wirkungsvoll. Bei einer Gürtelbandage mit in 0° orientierten Festigkeitsträgern ist das nicht der Fall. Die Monofilamente aus Stahl der Sperrlagen haben einen hohen Kompressionsmodul und können daher die Funktion einer Sperrlage übernehmen. Zudem ermöglichen die Monofilamente zusätzliche Material- und Gewichtseinsparung und bieten einen zusätzlichen Rollwiderstandsvorteil.

Zudem ist erreicht, dass neben einer Verbesserung des Rollwiderstandes auch die Seitenkraftsteifigkeit (C_{α}) verbessert ist. Bisher lagen die Verbesserungen von Rollwiderstand in Bezug auf die Seitenkraftsteifigkeit in einen Zielkonflikt (und vice verca). Das bedeutet, dass nur der Rollwiderstand unter Verschlechterung der Seitenkraftsteifigkeit und vice verca verbesserbar war. Der erfindungsgemäße Reifen zeigt sowohl eine Verbesserung des Rollwiderstandes als auch eine Verbesserung der Seitenkraftsteifigkeit. Der bisher bestehende Zielkonflikt ist entschärft, die Performance des Fahrzeugluftreifens ist verbessert.

"Axial" meint eine Richtungsangabe, die parallel zur Drehachse des Fahrzeugluftreifens verläuft.

"Äquatorialebene" meint die Ebene, die senkrecht zur Drehachse des Fahrzeugluftreifens steht und durch die Mitte des Laufstreifens verläuft.

"Monofilament" meint einen Festigkeitsträger, der aus einem einzigen Filament (linienförmiges Element beliebiger Länge) besteht.

"PKW-Fahrzeugluftreifen" meint PKW- und Van-Fahrzeugluftreifen.

"Radial" meint eine Richtungsangabe, die senkrecht zur Drehachse des Fahrzeugluftreifens verläuft.

"Erste Gürtellage" meint diejenige Gürtellage des Gürtelpakets, die radial innen innerhalb des Gürtelpakets angeordnet ist.

"Zweite Gürtellage" mein diejenige Gürtellage des Gürtelpakets, die radial außen auf der ersten Gürtellage angeordnet ist.

"Sperrlage" oder auch "dritte Gürtellage" meint die dritte Gürtellage des Gürtelpakets, welche in Kautschuk eingebettete, beabstandet und parallel zueinander angeordnete Festigkeitsträger aufweist, wobei die Festigkeitsträger in einem Winkel von 50° bis 90° zur Reifenumfangsrichtung orientiert sind. Die Sperrlage behindert die Bewegung der gekreuzten Gürtellagen (1. Gürtellage und 2. Gürtellage).

In einer Weiterbildung der Erfindung ist vorgesehen, dass die dritte Gürtellage radial innen oder radial außen im Gürtelpaket angeordnet ist. So kann die Sperrlage radial innen von der ersten Gürtellage oder radial außen von der zweiten Gürtellage angeordnet sein.

In einer Weiterbildung der Erfindung ist vorgesehen, dass die dritte Gürtellage eine Breite von 30% - 110% der Breite der ersten Gürtellage aufweist.

In einer Weiterbildung der Erfindung ist vorgesehen, dass das Monofilament an seiner breitesten Stelle einen Durchmesser von 0,2mm - 0,6mm, vorzugsweise von 0,35mm aufweist. Die Monofilamente erlauben eine dünnere Gürtellage einschließlich der Gummierung im Vergleich zu eingebetteten Korden aus mindestens zwei Filamenten. Vorzugweise weist das Monofilament einen runden Querschnitt auf.

In einer Weiterbildung der Erfindung ist vorgesehen, dass eine Gürtelbandage oberhalb der Gürtellagen angeordnet ist, die zumindest die Gürtelkanten dieser Gürtellagen abdeckt. Die aus einer oder mehreren umfangsorientierten Lagen bestehende Gürtelbandage dient im Wesentlichen dazu, zusätzlich Kräfte in Umfangsrichtung aufzunehmen, um beispielsweise das Reifenwachstums aufgrund von Fliehkräften im Hochgeschwindigkeitsbetrieb des Reifens zu begrenzen und die Gürtelkanten niederzuhalten. Hierzu verlaufen die Festigkeitsträger einer Gürtelbandage in etwa in Umfangsrichtung des Reifens. Die Gürtelbandage kann entweder nur die Kanten der Gürtellagen abdecken oder über die gesamte axiale Breite der Gürtellagen angeordnet sein und zudem die Kanten der Gürtellage abdecken.

Das Gürtelpaket des erfindungsgemäßen Fahrzeugluftreifens besteht aus drei Lagen: der ersten Gürtellage, der zweiten Gürtellage und der Sperrlage (dritte Gürtellage). Das Gürtelpaket kann optional eine Gürtelbandage aufweisen. Die Gürtelbandage ist nicht Bestandteil des Gürtelpakets.

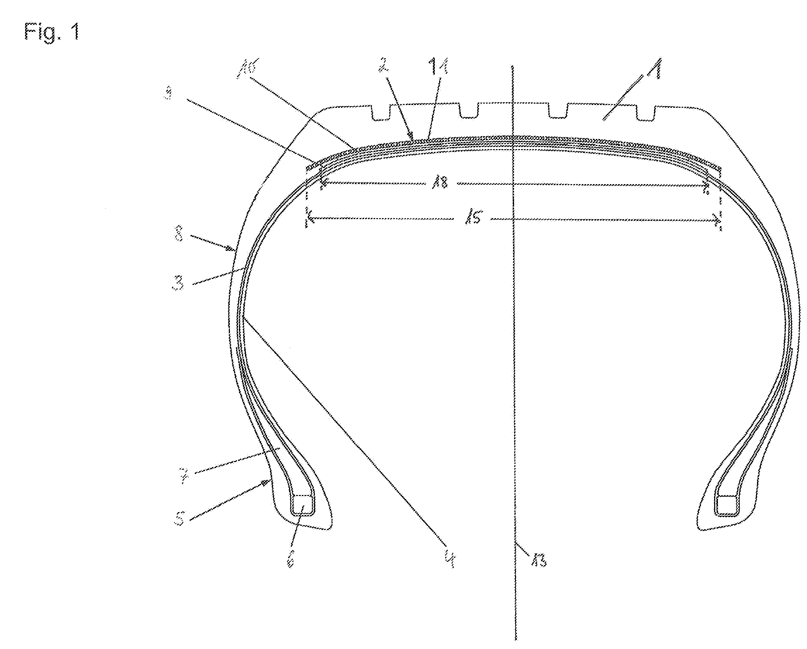

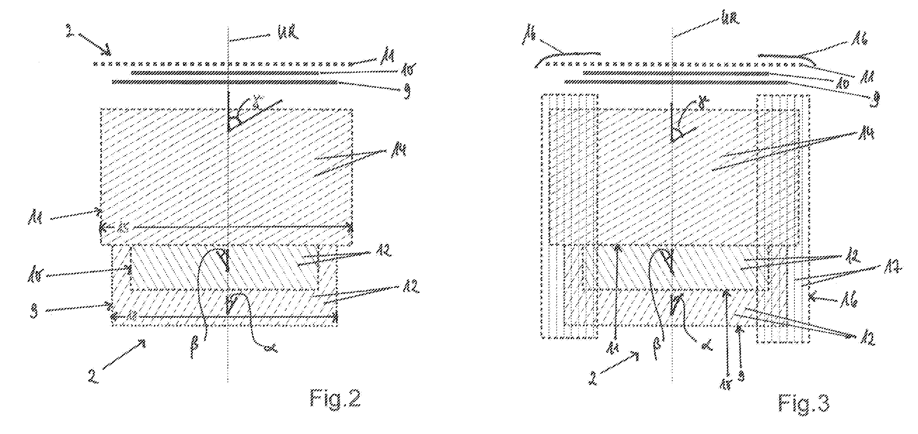

Die nachfolgende Tabelle zeigt Testwerte eines PKW-Fahrzeugluftreifens der Dimension 205/55R16, welcher ein gemäß der Figuren 1 und 2 beschriebenes Gürtelpaket aufweist im Vergleich zu einem Referenzreifen der gleichen Dimension, der ein Gürtelpaket, bestehend aus zwei gekreuzten Gürtellagen mit Stahlkorden der Konstruktion 2 x 0,30mm, wobei die Stahlkorde einen Winkel mit der Umfangsrichtung von 28° einschließen. Oberhalb der Gürtellagen ist eine Gürtelbandage mit textilen Festigkeitsträgern angeordnet. Die Gürtelbandage besteht aus einem endlos gespulten Gummistreifen, der einen Textilkord enthält, wobei der Textilkord in etwa in Umfangsrichtung verläuft.
Das Testergebnis zeigt, dass der erfindungsgemäße PKW-Fahrzeugluftreifen bei gleichem Rollwiderstand eine um 15% verbesserte Seitenkraftsteifigkeit aufweist. Die deutlich erhöhte Seitenkraftsteifigkeit C_{α} erlaubt die Verwendung rollwiderstandsärmerer Mischungen für den Laufstreifen ohne Nachteile im Handlingverhalten des Reifens.

**Tabelle**

| | Referenzreifen | Erfindungsgemäßer Reifen |
|---|---|---|
| Rollwiderstand [%] | 100 | 104 |
| C_{α} [%] | 100 | 110 |

Die Erfindung wird nun anhand von Figuren, die schematische Ausführungsbeispiele darstellen, näher erläutert. Dabei zeigen die:
Fig.1 einen Teilquerschnitt durch einen Fahrzeugluftreifen radialer Bauart für Personenkraftwagen;
Fig.2 eine Aufsicht auf das Gürtelpaket des Fahrzeugluftreifens der Fig.1 mit oberhalb des Gürtelpaktes dargestellten Gürtelpaketquerschnitts;
Fig.3 eine Aufsicht auf ein anderes Gürtelpaket eines erfindungsgemäßen Fahrzeugluftreifens mit oberhalb des Gürtelpaktes dargestellten Gürtelpaketquerschnitts.

Gemäß des in Fig. 1 gezeigten Querschnitts sind beispielhaft die wesentlichen Bauteile, aus welchen sich der dargestellte PKW-Fahrzeugluftreifen zusammensetzt: ein profilierter Laufstreifen 1, ein aus einer ersten Gürtellage 9, einer zweiten Gürtellage 10 und einer Sperrlage 11 bestehendes Gürtelpaket 2, eine einlagig oder alternativ zweilagig ausgeführte Karkasse 3, eine weitgehend luftdicht ausgeführte Innenschicht 4, Wülste 5 mit Wulstkernen 6 und Kernprofilen 7, sowie Seitenwände 8. Die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlkord aufweisen. Die Karkasse 3 ist um die Wulstkerne 6 von innen nach außen geführt, ihre Hochschläge verlaufen neben den Wulstkernprofilen 7 in Richtung Gürtelpaket 2.

Die erste Gürtellage 9 und die zweite Gürtellage 10, vergl. **Fig.2****,** bestehen aus in eine Gummimischung eingebetteten Monofilamenten 12 aus Stahl, welche innerhalb der beiden Gürtellagen 9, 10 parallel zueinander verlaufen. Die Monofilamente 12 der ersten Gürtellage 9 sind in kreuzender Anordnung zu den Monofilamenten 12 der zweiten Gürtellage 10 orientiert und schließen mit der Reifenumfangsrichtung (UR) jeweils einen Winkel zwischen 12° und 45°, vorzugsweise die erste Gürtellage 9 einen Winkel α von + 28° und die zweite Gürtellage 10 einen Winkel β von - 28°. Die Monofilamente 12 weisen einen runden Querschnitt mit einem Durchmesser von 0,35mm auf. Die erste Gürtellage 9 ist radial innen angeordnet, während die zweite Gürtellage 10 radial außen auf der ersten Gürtellage 9 aufliegt. Die dritte Gürtellage 11 des Gürtelpakets 2 ist eine Sperrlage, welche ebenfalls Monofilamente (14) eines Durchmessers von 0,35mm aufweist, welche mit der Umfangsrichtung des Fahrzeugluftreifens einen Winkel γ von 50° bis 90°, vorzugsweise von 60° einschließen. Die dritte Gürtellage 11 liegt radial außen auf der zweiten Gürtellage 10 auf und deckt sowohl die erste Gürtellage 9 als auch die zweite Gürtellage 10 vollständig ab. Somit deckt die dritte Gürtellage 11 zumindest den Bereich der Äquatorialebene 13 ab. Die Breite 15 der dritten Gürtellage 11 beträgt typischerweise: Breite der zweiten Gürtellage + 20mm.

Die **Fig.3** zeigt eine Aufsicht auf das Gürtelpaket 2 der Fig.2 mit oberhalb des Gürtelpaktes 2 angeordneter Gürtelbandage 16 und einen Querschnitt durch dieses Gürtelpaket 2 mit Gürtelbandage 16. Die Gürtelbandage 16 deckt die Kanten des Gürtelpakets 2 ab und ist nicht im Bereich der Äquatorialebene 13 angeordnet. Die Festigkeitsträger 17 der Gürtelbandage 16 verlaufen in Umfangsrichtung des Fahrzeugluftreifens.

### Liste der Bezugszeichen

- 1: Laufstreifen
- 2: Gürtelpaket
- 3: Karkasse
- 4: Innenschicht
- 5: Wulst
- 6: Wulstkern
- 7: Kernprofil
- 8: Seitenwand
- 9: 1.Gürtellage
- 10: 2.Gürtellage
- 11: 3.Gürtellage (Sperrlage)
- 12: Monofilament
- 13: Äquatorialebene
- 14: Festigkeitsträger der 3. Gürtellage
- 15: Breite der 3. Gürtellage
- 16: Gürtelbandage
- 17: Festigkeitsträger der Gürtelbandage
- 18: Breite der 1. Gürtellage

- UR: Umfangsrichtung
- aR: axiale Richtung
- rR: radiale Richtung

## Patentansprüche

1. PKW-Fahrzeugluftreifen in Radialbauart mit einem Gürtelpaket (2), welches eine erste und eine zweite Gürtellage (9, 10) aufweist, wobei die erste und die zweite Gürtellage (9, 10) aus in Kautschukmaterial eingebetteten, im Wesentlichen parallel und beabstandet zueinander angeordneten Monofilamenten (12) aus Stahl bestehen und wobei die Monofilamente (12) der ersten Gürtellage (9) kreuzend zu den Monofilamenten (12) der zweiten Gürtellage (10) angeordnet sind, **dadurch gekennzeichnet, dass** das Gürtelpaket (2) eine dritte Gürtellage (11) in Funktion einer Sperrlage aufweist, dass diese dritte Gürtellage (11) wenigstens im Bereich der Äquatorialebene (13) des Fahrzeugluftreifens angeordnet ist, dass die Festigkeitsträger (14) dieser dritten Gürtellage (11) einen Winkel zwischen 50° und 90° mit der Umfangsrichtung (UR) des Fahrzeugluftreifens einschließen und dass die Festigkeitsträger der dritten Gürtellage (14) Monofilamente aus Stahl sind.

2. Fahrzeugluftreifen nach Anspruch 1,
**dadurch gekennzeichnet, dass** die dritte Gürtellage (11) eine Breite von 30% - 110% der Breite der ersten Gürtellage (18) aufweist.

3. Fahrzeugluftreifen nach einem oder mehreren der vorangehenden Ansprüche,
**dadurch gekennzeichnet, dass** das Monofilament (12) einen Durchmesser an seiner breitesten Stelle von 0,2mm - 0,6mm, vorzugsweise von 0,35mm aufweist.

4. Fahrzeugluftreifen nach einem oder mehreren der vorangehenden Ansprüche,
**dadurch gekennzeichnet, dass** eine Gürtelbandage (16) oberhalb des Gürtelpaketes (2) angeordnet ist die zumindest die Gürtelkanten der Gürtellagen (9, 10, 11) dieses Gürtelpakets (2) abdeckt.

5. Fahrzeugluftreifen nach einem oder mehreren der vorangehenden Ansprüche,
**dadurch gekennzeichnet, dass** die dritte Gürtellage (11) radial innen oder radial außen im Gürtelpaket (2) angeordnet ist.

6. Fahrzeugluftreifen nach Anspruch 4,
**dadurch gekennzeichnet, dass** die Gürtelbandage (16) durchgehend oberhalb des Gürtelpakets (2) angeordnet ist und dieses komplett abdeckt.

## Claims

1. Pneumatic vehicle tyre for a passenger car, of a radial type of construction, comprising a belt assembly (2), which has a first and a second belt ply (9, 10), wherein the first and the second belt plies (9, 10) are made of steel monofilaments (12) embedded in rubber material, arranged substantially parallel and spaced apart from one another, and wherein the monofilaments (12) of the first belt ply (9) are arranged crossing the monofilaments (12) of the second belt ply (10), **characterized in that** the belt assembly (2) has a third belt ply (11) functioning as a blocking ply, **in that** this third belt ply (11) is arranged at least in the region of the equatorial plane (13) of the pneumatic vehicle tyre, **in that** the reinforcements (14) of this third belt ply (11) form with the circumferential direction (UR) of the pneumatic vehicle tyre an included angle between 50° and 90° and that the reinforcements of the third belt ply (14) are steel monofilaments.

2. Pneumatic vehicle tyre according to Claim 1,
**characterized in that** the third belt ply (11) has a width of 30% - 110% of the width of the first belt ply (18).

3. Pneumatic vehicle tyre according to one or more of the preceding claims,
**characterized in that** the monofilament (12) has a diameter at its widest point of 0.2 mm - 0.6 mm, preferably of 0.35 mm.

4. Pneumatic vehicle tyre according to one or more of the preceding claims,
**characterized in that** a belt bandage (16) is arranged above the belt assembly (2) covering at least the belt edges of the belt plies (9, 10, 11) of this belt assembly (2).

5. Pneumatic vehicle tyre according to one or more of the preceding claims,
**characterized in that** the third belt ply (11) is arranged radially on the inside or radially on the outside in the belt assembly (2).

6. Pneumatic vehicle tyre according to Claim 4,
**characterized in that** the belt bandage (16) is arranged continuously above the belt assembly (2) and completely covers it.

## Revendications

1. Pneumatique de véhicule de type radial pour voiture automobile avec un ensemble de nappes ceintures (2), qui présente une première nappe ceinture et une deuxième nappe ceinture (9, 10), dans lequel la première et la deuxième nappes ceintures (9, 10) se composent de monofilaments (12) en acier noyés dans la masse de caoutchouc et disposés essentiellement parallèlement et à distance l'un de l'autre et dans lequel les monofilaments (12) de la première nappe ceinture (9) sont disposés de façon à croiser les monofilaments (12) de la deuxième nappe ceinture (10), **caractérisé en ce que** l'ensemble de nappes ceintures (2) présente une troisième nappe ceinture (11) faisant fonction de nappe d'arrêt, **en ce que** cette troisième nappe ceinture (11) est disposée au moins dans la région du plan équatorial (13) du pneumatique de véhicule, **en ce que** les éléments de résistance (14) de cette troisième nappe ceinture (11) forment un angle compris entre 50° et 90° avec la direction périphérique (UR) du pneumatique de véhicule et **en ce que** les éléments de résistance (14) de la troisième nappe ceinture sont des monofilaments en acier.

2. Pneumatique de véhicule selon la revendication 1, **caractérisé en ce que** la troisième nappe ceinture (11) présente une largeur de 30 % - 110 % de la largeur (18) de la première nappe ceinture.

3. Pneumatique de véhicule selon une ou plusieurs des revendications précédentes, **caractérisé en ce que** le monofilament (12) présente à son point le plus large un diamètre de 0,2 - 0,6 mm, de préférence de 0,35 mm.

4. Pneumatique de véhicule selon une ou plusieurs des revendications précédentes, **caractérisé en ce qu'**un bandage de ceinture (16) est disposé au-dessus de l'ensemble de nappes ceintures (2), et recouvre au moins en partie les bords de ceinture des nappes ceintures (9, 10, 11) de cet ensemble de nappes ceintures (2).

5. Pneumatique dé véhicule selon une ou plusieurs des revendications précédentes, **caractérisé en ce que** la troisième nappe ceinture (11) est disposée radialement à l'intérieur ou radialement à l'extérieur dans l'ensemble de nappes ceintures (2).

6. Pneumatique de véhicule selon la revendication 4, **caractérisé en ce que** le bandage de ceinture (16) est disposé de façon continue au-dessus de l'ensemble de nappes ceintures (2) et recouvre celui-ci entièrement.
